# EUROPEAN PATENT APPLICATION

(11) **EP 4 752 018 A1**
(43) Date of publication of application: **03.06.2026**
(21) Application number: 24216657.7
(22) Date of filing: 29.11.2024
(51) Int. Cl.: B60T 13/66, B60T 13/68

(54) **COMPUTER IMPLEMENTED METHOD AND COMPUTER SYSTEM FOR CONTROLLING A PARK BRAKE RELAY VALVE, PARK BRAKE SYSTEM FOR IMPLEMENTING SUCH A METHOD AND VEHICLE INCLUDING SUCH A PARK BRAKE SYSTEM**

(71) Applicant: VOLVO TRUCK CORPORATION, 405 08 Göteborg (SE)
(72) Inventor: MONNIER, Martin, 69007 LYON (FR); FARRES, Lionel, 38540 HEYRIEUX (FR)
(74) Representative: Lavoix

(57) **Abstract**

A computer-implemented method controls at least one park brake relay valve (64) of a park brake system (66) of a vehicle (20), via control signals (S₅₁) sent to a park brake control unit (62), which controls the park brake relay valve, based on requests signals (S₅₂, S₅₄, S₅₆) received from at least one requester (52, 54, 56). The request signals take either an activated value, when the request is presented, or a neutral value, when the request is not presented. The request signals are sent with a given signal frame. The method comprises a safety check performed, when a request signal (S₅₂, S₅₄, S₅₆) is received, by a request arbitrator (70) to assess if the request is valid, by determining whether or not the request signal is longer than a first predetermined time-period (Δt1) and whether or not, during a second predetermined time-period (Δt2), the request signal takes the neutral value.

## Description

### TECHNICAL FIELD

The disclosure relates generally to braking of vehicle with park brakes. In particular aspects, the disclosure relates to a method for controlling at least one park brake relay valve of a park brake system of a vehicle. In particular, the disclosure also relates to a computer system for controlling at least one park brake relay valve of a park brake system of a vehicle. The disclosure also relates to a park brake system comprising a request arbitrator for implementing such a method and to a vehicle including such a park brake system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of vehicles, care must be taken that, when a vehicle is parked, it is held stationary. It is therefore known to use park brakes on a tractor and on a trailer of the vehicle, when the vehicle includes a trailer.

In vehicles equipped with an electronic park brake system, it is possible for an original equipment manufacturer to introduce a remote way to control the electronic park brake system from another sub-system of the vehicle. In such a case, parking brake actuation or parking brake release must be implemented with strict safety measures. In particular, they must not occur when they are not desired or incorrectly requested, for instance from an external sub-system, since this can lead to potentially dangerous situations.

### SUMMARY

According to a first aspect of the disclosure, a computer-implemented method for controlling at least one park brake relay valve of a park brake system of a vehicle, via control signals sent to a park brake control unit controlling the park brake relay valve, based on requests signals received from at least one requester, the request signals taking either an activated value, when the request is presented, or a neutral value, when the request is not presented, and the request signals being sent with a given signal frame, comprises a safety check performed, when a request signal is received, by a request arbitrator to assess if the request is valid, by determining i) whether or not the request signal is longer than a first predetermined time-period; and ii) whether or not, during a second predetermined time-period, the request signal takes the neutral value.

The first aspect of the disclosure may seek to improve safety of operation of the park brake system.

A technical benefit may include that a request included in a signal is implemented only when it is validated, as a result of the safety check. The request arbitrator is used between the requesters and the parking brake relay valve, in order to protect the parking brake relay from the requesters. The requests are governed by a time window. More particularly, in order to fulfill the safety check and to be validated, a request needs to meet a certain minimum amount of time, that is the first predetermined time-period, in the activated value, and then the request needs to go back to a neutral value before a certain maximum amount of time, that is the second predetermined time-period, to validate the request.

Optionally in some examples, including in at least one preferred example, the first predetermined time-period is at least 3 ms, preferably at least 150 ms. A technical benefit may include that the first predetermined time-period is long enough to avoid that unwanted sending of a request results in the request being unduly forwarded to the park brake relay valve and executed.

Optionally in some examples, including in at least one preferred example, the first predetermined time-period is larger than, or equal to, a predetermined number of a signal frames of the request signal. A technical benefit may include that the duration of the first predetermined time-period is determined based on the signal frame, also called "frame time period" or "cycle time", of the request signal. This makes sure that the request can be fully received within the first predetermined time-period.

Optionally in some examples, including in at least one preferred example, the first predetermined time-period is larger than or equal to a three times the signal frame of the request signal. A technical benefit may include that the number of signal frames used for determining the first predetermined time-period is enough to make sure that the safety check is efficient.

Optionally in some examples, including in at least one preferred example, the second predetermined time-period is at least 10 ms, preferably at least 500 ms. A technical benefit may include that the second predetermined time-period is long enough to avoid unwanted sending of a request results in the request being unduly forwarded to the park brake relay valve.

Optionally in some examples, including in at least one preferred example, the second predetermined time-period is larger than, or equal to, a predetermined number of signal frames of the request signal. A technical benefit may include the duration of the second predetermined time-period is determined based on the signal frame of the request signal.

Optionally in some examples, including in at least one preferred example, the second predetermined time-period is larger than or equal to five times the signal frame of the request signal; preferably larger than or equal to eight times the signal frame of the request signal; still preferably larger than or equal to ten times the signal frame of the request signal. A technical benefit may include that the number of signal frames used for determining the first predetermined time-period is enough to make sure that the safety check is efficient.

Optionally in some examples, including in at least one preferred example, at least some request signals are sent to a central ECU, wherein the central ECU sends the control signals to the park brake control unit and wherein the safety check is performed by the request arbitrator within the central ECU. A technical benefit may include that the central ECU includes the main functions of the method.

Optionally in some examples, including in at least one preferred example, the request signals include at least some of the following requests for park brake: application of park brake; release of park brake; proportional control of park brake; pre-release of park brake; and release inhibition of park brake. A technical benefit may include that a large number of different requests can be handled.

Optionally in some examples, including in at least one preferred example, the vehicle includes a tractor and at least one trailer and wherein the control signals include at least some of the following requests for an air supply line of the trailer: air supply; air exhaust; proportional control; air supply inhibition. A technical benefit may include that different ways of piloting the park brakes of the trailer may be implemented.

Optionally in some examples, including in at least one preferred example, the method comprises at least the following steps consisting in a) receiving a request signal in a ECU; b) counting the time elapsed since step a); c) comparing the time elapsed since step a) to the first predetermined time-period; d) watching for a change of the request signal to a neutral value; e) comparing the time counted in step b) to the second predetermined time-period. The request signal is valid only if the result of step c) is that the elapsed time counted in step b) is larger than the first predetermined time-period; and the result of step e) is that the elapsed time counted in step b) is smaller than the second predetermined time-period. A technical benefit may include that the different steps of the method facilitate the safety check.

According to a second aspect of the disclosure, a computer system for controlling at least one park brake relay valve of a park brake system of a vehicle, via control signals sent to a park brake control unit controlling the park brake relay valve, based on requests signals received from at least one requester, the request signals taking either at least one activated value, when the request is presented, or a neutral value, when the request is not presented, and the request signals being sent within a given signal frame, comprises a request arbitrator configured to, when a request signal is received, perform a safety check to assess if the request is valid, by determining i) whether or not the request signal is longer than a first predetermined time-period whether or not, during a second predetermined time-period, the request signal takes the neutral value. The second aspect of the disclosure may seek to improve the safety of operation of a park brake system.

A technical benefit may include that a request included in a signal is implemented only when it is validated, as a result of the safety check.

According to a third aspect of the disclosure, the invention relates to a park brake system of a vehicle, said park brake system comprising park brakes, a park brake relay valve, a park brake control unit and a requester arbitrator configured to implement a method as described above. The third aspect of the disclosure may seek to allow safer operation of a truck equipped with this park brake system.

A technical benefit may include that the request arbitrator can guarantee that the request included in a signal is implemented only when it validated, as a result of the safety check.

Optionally in some examples, including in at least one preferred example, the park brake system further comprises, a control unit including the request arbitrator and one or several requesters among a body builder module, a driver assistance control unit, an electronic brake system, a vehicle motion management module, a trailer brakes on-demand module, a collision mitigation module, a battery charging module and/or a proactive engine start & stop module, logically connected to the control unit. A technical benefit may include that the park brake is well adapted to modern vehicles.

Optionally in some examples, including in at least one preferred example, the control unit is a vehicle central ECU. A technical benefit may include that the vehicle central ECU includes the main components of the park brake system.

Optionally in some examples, including in at least one preferred example, the vehicle central ECU includes at least some of the following modules : a vehicle motion management module, a collision mitigation module, a trailer on-demand brake module, a battery charging module, a proactive engine start and/or a stop module, capable of sending requests to the request arbitrator. A technical benefit may include that the vehicle central ECU is compatible with the architecture of modern vehicles.

According to a fourth aspect of the disclosure, the invention relates to a vehicle including a park brake system as previously described. The fourth aspect of the disclosure may seek to provide a vehicle with increased safety features. A technical benefit may include that the park brake system is capable of avoiding unwanted actuation or release of the park brakes.

Optionally in some examples, including in at least one preferred example, the vehicle further includes a tractor and a trailer, whereas the park brake system controls, on the one hand, a park brake relay valve of the tractor and, on the other hand, an air supply line of the trailer. A technical benefit may include an efficient control of the park brakes of the tractor and of the trailer of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to an example, including a park brake system according to an example;
**FIG 2** is a functional diagram of a park brake system according to an example;
**FIG. 3** is a block diagram of a method according to an example;
**FIG. 4** is a temporal representation of example request signals over time; and
**FIG. 5** is another functional diagram, similar to FIG.2, of a park brake system according to another example.

### DETAILED DESCRIPTION

The detailed description set forth below provides information and examples of the disclosed technology with sufficient detail to enable those skilled in the art to practice the disclosure.

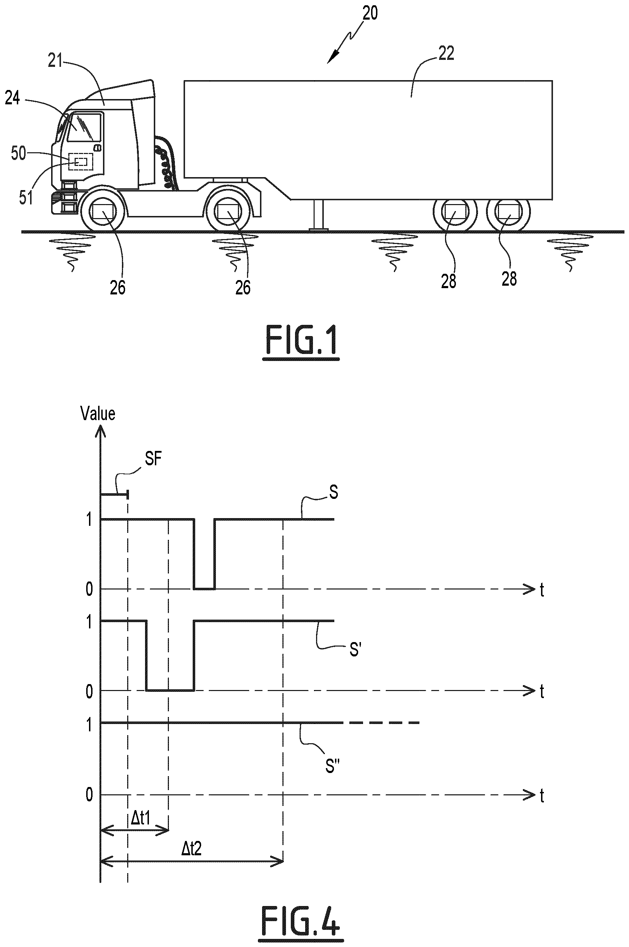

FIG. 1 shows an exemplary vehicle 20 according to an example. Here, the vehicle is a truck 20 comprising a tractor 21 (also known as "tractor unit") and a trailer 22 (also known as "semi-trailer 22"). The tractor 21 comprises a cab or cabin 24. The truck 20 comprises multiple elements such as a non-represented powertrain, which may include an internal combustion engine, an electric motor or and hybrid system. The tractor 21 and the trailer 22 are each equipped with some non-represented service brakes and some park brakes 26, respectively 28.

The truck 20 further comprises a computer system 50. The computer system 50 is preferably located inside the cabin 24 and comprises a processing circuitry 51, here in the form of a vehicle central module unit or VMCU. The VMCU may also be called VCM, for "vehicle central module". The VMCU or VCM 51 is a central electronic control unit or ECU of the vehicle 20. The computer system 50 and the processing circuitry 51 are shown extremely schematically in FIG. 1 and are not representative of their real form.

The processing circuitry 51 may include any number of hardware components for conducting data or signal processing or for executing computer code stored in a memory 53. The processing circuitry 51 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 51 may further include computer executable code that controls operation of the programmable device.

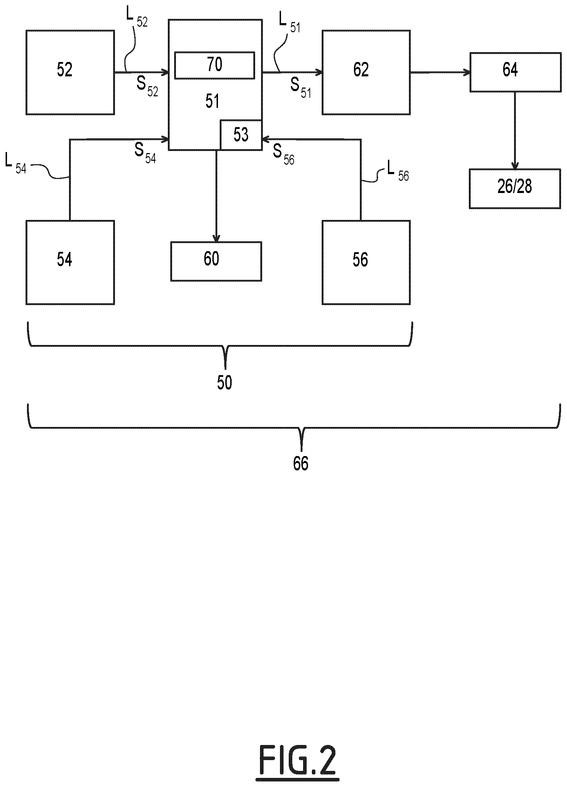

As visible on FIG. 2, the computer system 50 includes, in addition to the VMCU 51, several requesters 52, 54 and 56, capable of sending request signals to the VMCU.

The first requester is a bodybuilder module 52 or BBM configured for controlling the vehicle 20 from a non-represented accessory, such as a nacelle, via request signals S₅₂ sent to the VMCU, through an electric connection line L₅₂. The BBM 52 is often provided by the bodybuilder, not by the manufacturer of the truck 20. In particular, the first requester 52 may pilot the park brakes 26 and/or 28, for instance when a user standing in the nacelle wants to park the truck.

The second requester is a driver assistance control unit 54 or DACU configured to provide to the driver of the vehicle 20 with an assistance for automatic emergency braking. When an emergency braking has been triggered and in case the driver does not react, the DACU may apply the park brakes 26 and/or 28. The DACU controls the vehicle via request signals S₅₄ sent to the VMCU 51, through an electric connection line L₅₄.

The third requester is an electronic brake system 56 or EBS configured to selectively apply the service brakes and the park brakes 26 and/or 28 of the vehicle 20. The EBS controls the vehicle via request signals S₅₆ sent to the VMCU 51, through an electric connection line L₅₆.

The number and types of requester(s) of the computer system 50 are not limitative.

Alternatively, communication between the requester(s) and the VMCU or between the VCMU and the park brake control unit 62 occurs through a bus or wirelessly.

The computer system 50 also includes a driver interface 60 or DI integrated in an instrument cluster, preferably in the form of a display screen mounted in the cabin 24.

The computer system 50 also includes a park brake control unit 62, which is an electronic control unit or ECU, configured to control a park brake relay valve 64. The park brake control unit 62 and the park brake relay valve 64 do not belong to the computer system 50.

The park brake relay valve 62 pneumatically controls the park brakes 26 and/or 28.

In the example, the park brake relay valve 64 is mounted on the tractor 21 and controls its park brakes 26, whereas another non-represented park brake relay valve mounted on the trailer 22 is supplied with air under pressure via a non-represented air supply line of the trailer and controls the trailer park brakes 28.

The computer system 50, the park brake relay valve 64 and the park brakes 26 and 28 together belong to a park brake system 66 of the vehicle 20.

The VMCU 51 controls the park brake control unit 62 via control signals S₅₁ transiting through one or several connection line(s) L₅₁.

The request signals S₅₂, S₅₄ and S₅₆ may include several types of requests, such as application of park brake, release of park brake, proportional control of park brake (when the park brake is used as a service brake), pre-release of park brake and release inhibition of park brake.

In practice, each signal S₅₂, S₅₄ or S₅₆ is emitted by the corresponding requester 52, 54 or 56 with a predetermined signal frame SF, also called "frame time period" or "cycle time". The signal frame SF, frame time period or cycle time is a period sufficient for the request to be fully transmitted by the corresponding signal. Advantageously, the signal frame SF is at least 1 ms (millisecond), preferably at least 50 ms.

The VMCU 51 is configured to receive and process each request R received within a request signal, prior to forwarding it to the park brake control unit 62, if it is valid.

An issue with the vehicle 20 is that, irrespective of its exact type, a request R included in a signal S₅₂, S₅₄ or S₅₆ must be taken into account only when it is valid, in other words correctly sent by one of the requesters to the VMCU 51. With this respect, it may happen that a request signal is sent by accident, due to a default in one requester or to an inappropriate manipulation of the requester by a user. For instance, a short request signal may be emitted by the requester and received by the VMCU 51, but the corresponding request R should not be forwarded to the park brake control unit 64. Conversely, a default in a requester might generate a "permanent" emission of a request signal, which is received by the VMCU 51, but the corresponding request R should not be forwarded to the park brake control unit 64.

This is handled by a request arbitrator 70 integrated in the VMCU 51 and configured to assess whether or not a request R received from one of the requesters 52, 54 and 56 in one the signals S₅₂, S₅₄ or S₅₆ is valid and must be forwarded to the park brake control unit 62.

The request arbitrator 70 may be a specific component of the circuitry 51, such as a micro-processor.

In a variant, the request arbitrator 70 is a software brick.

As shown on FIG. 4, a request is R incorporated in a request signal S(R), S'(R) or S"(R) as a succession of signal frames SF, where the request signal takes either an activated value when the request is presented, equal to 1 in the example, or a neutral value when the request is not presented, equal to 0 in the example.

The activated value may also be called a "high output state" or a "high logical state", and the neutral value may also be called a "low output state" or a "low logical state".

Alternatively, the activated value can be different from 1. According to a variant, the activated value equals O and the neutral value equals 1. According to another variant, a request signal can take several activated values.

On FIG. 4, a signal S(R), S'(R) or S"(R) may represent any of the request signals S₅₂, S₅₄ or S₅₆.

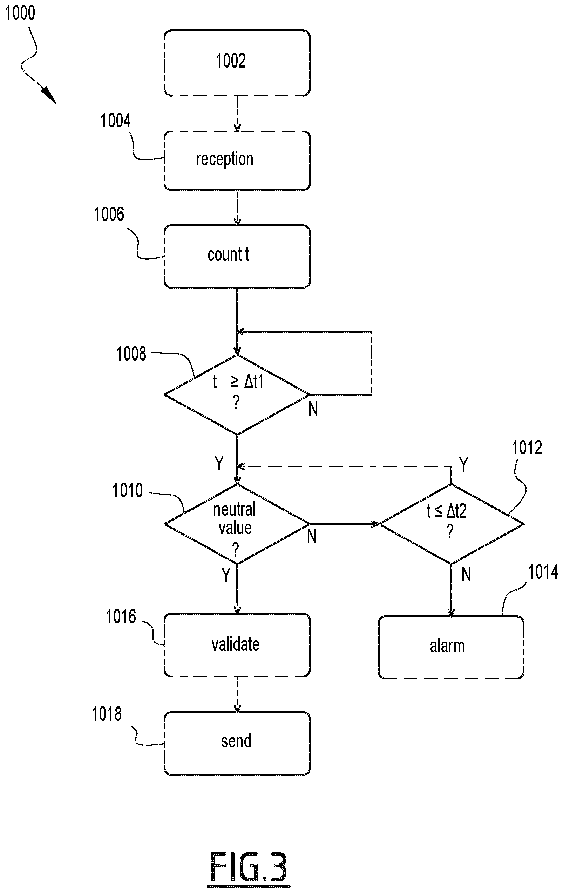

The request arbitrator 70 is configured to run a safety check upon reception of a request signal S₅₂, S₅₄ or S₅₆, as a part of a computerized-implemented method 1000 schematically represented on FIG. 3.

This method 1000 includes a first step 1002 where the circuitry formed by the VMCU 51 is initialized, including the request arbitrator 70.

The method 1000 includes a further step 1004, where a request signal S₅₂, S₅₄ or S₅₆ is received by the VMCU 51, from one of the requesters 52, 54 or 56, with the activated value, equal to 1 in the example.

In another step 1006 starting at step 1004, the VCMU counts the time, elapsed since the reception of the request signal, for which the request signal keeps the activated value. The step 1006 goes on as long as the method 1000 has not reached one of its final steps 1014 or 1018 discussed here below. Thus, the time t counted in step 1006 is representative of the duration of the request signal.

When step 1006 has started, the request arbitrator 70 runs the safety check.

In a first comparison step 1008, the request arbitrator 70 compares the time t counted at step 1006 to a first predetermined time-period Δt1.

One assumes that, if an unwanted request signal S₅₂, S₅₄ or S₅₆ is sent by one of the requesters 52, 54 or 56 by error, due to a dysfunction of the requester of a first type, this request signal will be short, in particular shorter than or of about the same duration as the signal frame SF.

The value of the first predetermined time-period Δt1 is selected to guarantee that, if the request signal is equal to or longer than this time-period Δt1, the request signal does not result from a dysfunction of the requester of the first type.

Advantageously, the first predetermined time-period Δt1 is at least 3 ms, preferably at least 150 ms.

Advantageously, the first predetermined time-period Δt1 is chosen in function of the signal frame SF, in particular larger than or equal to a predetermined number N1 of signal frames SF of the request signal. For instance, N1 can equal 3. In such a case, when the signal frame SF equals 50 ms, the first predetermined time-period Δt1 equals 150 ms or more.

The conditions of the two paragraphs here above are satisfied by the upper request signal S(R) on FIG. 4.

Step 1008 can be implemented at regular intervals, for instance every 25 ms. As long as the result of the comparison of step 1008 is negative, that is as long as the time counted at step 1006 is strictly smaller than the first predetermined time-period Δt1, step 1008 is repeated.

When the time counted at step 1006 becomes equal to or larger than the first predetermined time-period Δt1, the method switches to another step 1010 where it determines if the request signal takes the neutral value, 0 in the example.

If step 1010 determines that the signal did not take the neutral value, then a second comparison step 1012 is implemented by the request arbitrator 70, to determine if the time counted at step 1006 is strictly larger than a second predetermined time-period Δt2.

One assumes that, if an unwanted request signal S₅₂, S₅₄ or S₅₆ is sent by one of the requesters by error, due to a dysfunction of the requester of a second type, this request signal will be blocked at the activated value. This may happen when a requester 52, 54 or 56 is defective and continuously sends request. In such a case, at one stage, the time counted at step 1006 becomes larger than the second predetermined time-period Δt2, which is detected by the comparison of step 1012 and may be considered as an error in the park brake system 66.

Then, an alarm is triggered by the VCMU 51, in a step 1014.

If the comparison of step 1012 shows that the time t is smaller than or equal to the second predetermined time-period Δt2, then the step 1010 and possibly 1012 are implemented again.

Steps 1010 and 1012 can be implemented at regular intervals, for instance every 25 ms.

If step 1010 shows that the request signal has taken the neutral value, without the time t becoming larger than the second predetermined time-period Δt2, one assumes that the request signal S₅₂, S₅₄ or S₅₆ is valid, in so far as it correctly took the neutral value before the end of the second predetermined time-period Δt2.

Then, the request signal S₅₂, S₅₄ or S₅₆ is validated by the VCMU 51, in a further step 1016.

Thereafter, in a final step 1018, the VCMU 51 forwards the request to the park brake control unit 62, either as such or after adaptation, within a control signal S₅₁. The control signal S₅₁ may the same as, or different from, the request signal S₅₂, S₅₄ or S₅₆ received by the VCMU 51 at step 1004.

After that, the park brake control unit 62 controls the park brakes 26 and/or 28 as usual in the technical field concerned.

The value of the second predetermined time-period Δt2 is selected to guarantee that, if the request signal takes the neutral value prior to the end of the second predetermined time-period Δt2, the request signal does not result from a dysfunction of the requester of the second type.

Advantageously, the second predetermined time-period Δt2 is at least 10 ms, preferably at least 500 ms.

Advantageously, the second predetermined time-period Δt2 is chosen in function of the signal frame SF, in particular larger than or equal to a predetermined number N2 of signal frames SF of the request signal. For instance, N2 can equal 5, 8 or 10. In such a case, when the signal frame SF equals 50 ms, the second predetermined time-period Δt2 equals 250 ms, 400 ms or 500ms, or more.

Thus, the safety check performed by the arbitrator 70 in steps 1006 to 1016 makes sure that a request R is forwarded to the park brake control unit 62, within a control signal S₅₁, only when the request signal S₅₂, S₅₄ or S₅₆ received by the VCMU 51 at step 1004 is validated in step 1016, according to the criteria set in the method 1000.

In the example of FIG. 4, the top request signal S(R) is valid, as the result of the safety check, since it keeps the activated value 1 for four times the signal frame SF, more than Δt1, which satisfies the condition of step 1008, and since it takes the neutral value 0 less than eight times the signal frame SF after the beginning of the count of the time t in step 1006, less than Δt2, which satisfies the condition of steps 1010 and 1012.

In the example of FIG. 4, the intermediate request signal S'(R) is not valid, as the result of the safety check, since it never meets the condition of step 1008.

In the example of FIG. 4, the lower request signal S"(R) is not valid, as the result of the safety check, since it never meets the condition of the combination of steps 110 and 1012. An alarm is triggered in step 1014.

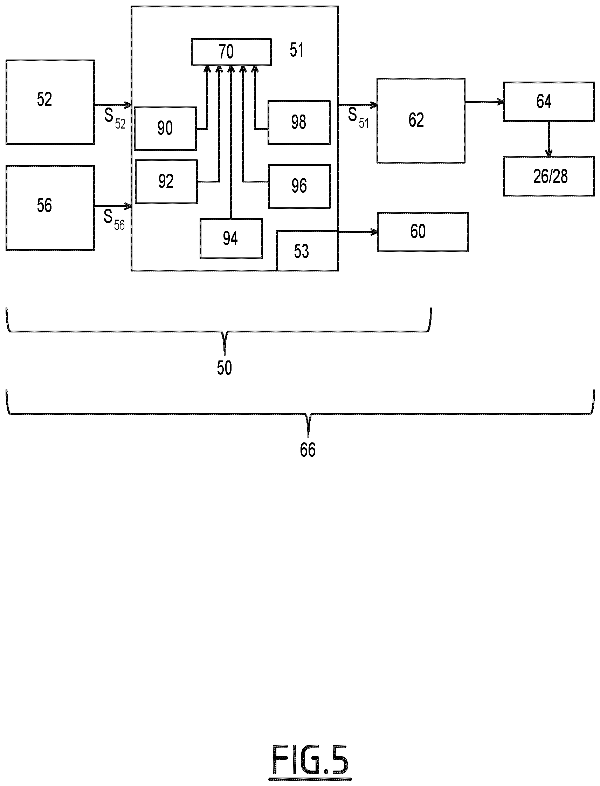

In the second example represented in FIG. 5, parts of the computer system 50 and of the park brake system 66 similar to the ones of the first example bear the same references. The description of the first example applies to the second example, except for what is mentioned here below. In particular, the method described here above can be implemented with the example of FIG. 5.

If a reference is shown on FIG. 5 without being mentioned in the description or mentioned in the description without being shown on FIG. 5, it designates the same part, entity or notion as the one with the same reference in the first example.

The computer system of FIG. 5 includes, as in the first example, a VCMU or VCM 51, first and second requesters respectively formed by a bodybuilder module 52 or BBM and electronic brake system 56 or EBS. No DACU is provided outside the VCMU 51. The VCMU 51 selectively feeds the park brake control unit 62 with requests received from the first and second requesters 52 and 56, depending on the result of the safety check performed by the request arbitrator 70, as in the first example.

In addition, some further requests may be handled by the request arbitrator 70 and selectively forwarded to the park brake control unit 62. These further requests come from further requesters which belong to the VCMU. These further requesters may include a vehicle motion management module 90 or VMMM, a trailer brakes on-demand module 92 or TBODM, a collision mitigation module 94 or CMM, a battery-charging module 96 or BCM and a proactive engine start & stop module 98 or PESSM. The respective request signals sent by the further requesters 90 to 98 circulate within the VCMU 51 and are handled by the request arbitrator 70 as the signals S₅₂ and S₅₆ sent by the first and second requesters 52 and 56.
In both examples, the method for controlling the park brake relay valve comprises at least the following steps consisting in
a) receiving, in step 1004, a request signal, S₅₂, S₅₄ or S₅₆ or equivalent, in a ECU, such as the VMCU 51;
b) counting, as from step 1006, the time t elapsed since step a);
c) comparing, in step 1008, the time elapsed since step a) to the first predetermined time-period Δt1;
d) watching, in step 1010, for a change of the request signal, S₅₂, S₅₄ or S₅₆ or equivalent, to a neutral value, such as 0 in the example;
e) comparing, in step 1012, the time counted in step 1006 to the second predetermined time-period Δt2;
The request signal, S₅₂, S₅₄ or S₅₆ or equivalent, is valid only if
- the result of step 1008 is that the elapsed time t counted in step 1006 is larger than the first predetermined time-period Δt1; and
- the result of step 1012 is that the elapsed time t counted in step 1006 is smaller than the second predetermined time-period Δt2.

The disclosure is applicable to all types of trucks, with and without trailers, and more generally with all types of vehicles equipped with park brakes and with a park brake relay valve for pneumatically controlling these park brakes.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer-implemented method for controlling at least one park brake relay valve 64 of a park brake system 66 of a vehicle 20, via control signals S₅₁ sent to a park brake control unit 62 controlling the park brake relay valve, based on requests signals S₅₂, S₅₄, S₅₆ received from at least one requester 52, 54, 56; 52, 56, 90-98, the request signals taking either an activated value 1, when the request is presented, or a neutral value 0, when the request is not presented, and the request signals being sent with a given signal frame, the method comprising a safety check 1006-1016 performed, when a request signal S₅₂, S₅₄, S₅₆ is received, by a request arbitrator 70 to assess if the request is valid, by determining i) whether or not the request signal is longer than a first predetermined time-period Δt1; and ii) whether or not, during a second predetermined time-period Δt2, the request signal S₅₂, S₅₄, S₅₆ takes the neutral value 0.

**Example 2:** The method of example 1, wherein the first predetermined time-period Δt1 is at least 3 ms, preferably at least than 150 ms.

**Example 3:** The method of any of the preceding examples, wherein the first predetermined time-period Δt1 is larger than, or equal to, a predetermined number of a signal frames SF of the request signal S₅₂, S₅₄, S₅₆.

**Example 4:** The method of example 3, wherein the first predetermined time-period Δt1 is larger than or equal to three times the signal frame SF of the request signal S₅₂, S₅₄, S₅₆.

**Example 5:** The method of any of the preceding examples, wherein the second predetermined time-period Δt2 is at least 10 ms, preferably at least 500 ms.

**Example 6:** The method of any of the preceding examples, wherein the second predetermined time-period Δt2 is larger than, or equal to, a predetermined number of signal frames SF of the request signal S₅₂, S₅₄, S₅₆.

**Example 7:** The method of example 6, wherein the second predetermined time-period Δt2 is larger than or equal to five times the signal frame SF of the request signal S₅₂, S₅₄, S₅₆.

**Example 8:** The method of example 6, wherein the second predetermined time-period Δt2 is larger than or equal to eight times the signal frame SF of the request signal S₅₂, S₅₄, S₅₆.

**Example 9:** The method of example 6, wherein the second predetermined time-period Δt2 is larger than or equal to ten times the signal frame SF of the request signal S₅₂, S₅₄, S₅₆.

**Example 10:** The method of any of the preceding examples, wherein at least some request signals S₅₂, S₅₄, S₅₆; S₅₂, S₅₆ are sent to a central ECU 51, wherein the central ECU sends the control signals S₅₁ to the park brake control unit 62 and wherein the safety check 1006-1016 is performed by the request arbitrator 70 within the central ECU.

**Example 11:** The method of any of the preceding examples, wherein the request signals S₅₂, S₅₄, S₅₆ include at least some of the following requests for park brake: application of park brake; release of park brake; proportional control of park brake; pre-release of park brake; and release inhibition of park brake.

**Example 12:** The method of any of the preceding examples, wherein the vehicle includes a tractor 21 and at least one trailer 22 and wherein the control signals S₅₁ include at least some of the following requests for an air supply line of the trailer: air supply; air exhaust; proportional control; air supply inhibition.

**Example 13:** The method of any of the preceding examples, comprising at least the following steps consisting in a) receiving 1004 a request signal S₅₂, S₅₄, S₅₆ in a ECU 51; b) counting 1006 the time elapsed since step a); c) comparing 1008 the time t elapsed since step a) to the first predetermined time-period Δt1; d) watching 1010 for a change of the request signal to a neutral value 0; e) comparing 1012 the time counted in step b) 1006 to the second predetermined time-period Δt2. The request signal is valid only if the result of step c) 1008 is that the elapsed time t counted in step b) is larger than the first predetermined time-period Δt1; and the result of step e) 1012 is that the elapsed time t counted in step b) is smaller than the second predetermined time-period Δt2.

**Example 14:** A computer system 50 for controlling at least one park brake relay valve 64 of a park brake system 66 of a vehicle 20, via control signals S₅₁ sent to a park brake control unit 62 controlling the park brake relay valve, based on requests signals S₅₂, S₅₄, S₅₆ received from at least one requester 52, 54, 56; 52, 56, 90-98, the request signals taking either at least one activated value 1, when the request is presented, or a neutral value 0, when the request is not presented, and the request signals being sent within a given signal frame, wherein the computer system comprises a request arbitrator 70 configured to, when a request signal S₅₂, S₅₄, S₅₆ is received, perform a safety check 1006-1016 to assess if the request is valid, by determining: i) whether or not the request signal is longer than a first predetermined time-period Δt1; and ii) whether or not, during a second predetermined time-period Δt2, the request signal S₅₂, S₅₄, S₅₆ takes the neutral value 0.

**Example 15:** A park brake system 66 of a vehicle 20, said park brake system comprising park brakes 26,28, a park brake relay valve 64, a park brake control unit 62 and a requester arbitrator 70 configured to implement a method according to one of examples 1 to 9.

**Example 16:** The park brake system of example 15, further comprising, a control unit 51 including the request arbitrator 70 and one or several requesters 52, 54, 56; 52, 56, 90-98 among a body builder module 52, a driver assistance control unit 54, an electronic brake system 56, a vehicle motion management module 90, a trailer brakes on-demand module 92, a collision mitigation module 94, a battery charging module 96 and/or a proactive engine start & stop module 98, logically connected to the control unit 51.

**Example 17:** The park brake system of any one of examples 15 and 16, wherein the control unit is a vehicle central ECU 51.

**Example 18:** The park brake system of example 17, wherein the vehicle central ECU 51 includes at least some of the following modules : a vehicle motion management module 90, a collision mitigation module 92, a trailer on-demand brake module 94, a battery charging module 96, a proactive engine start and/or a stop module 98, capable of sending requests to the request arbitrator 70.

**Example 19:** A vehicle 20 including a park brake system 66 according to one of examples 11 to 14.

**Example 20:** The vehicle of example 19 further including a tractor 21 and a trailer 22, wherein the park brake system 66 controls, on the one hand, a park brake relay valve 64 of the tractor and, on the other hand, an air supply line of the trailer.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the FIG.s. It will be understood that these terms and those discussed above are intended to encompass different orientations of the device in addition to the orientation depicted in the FIG.s. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer-implemented method for controlling at least one park brake relay valve (64) of a park brake system (66) of a vehicle (20), via control signals (S₅₁) sent to a park brake control unit (62) controlling the park brake relay valve, based on requests signals (S₅₂, S₅₄, S₅₆) received from at least one requester (52, 54, 56; 52, 56, 90-98), the request signals taking either an activated value (1), when the request is presented, or a neutral value (0), when the request is not presented, and the request signals being sent with a given signal frame, the method comprising a safety check (1006-1016) performed, when a request signal (S₅₂, S₅₄, S₅₆) is received, by a request arbitrator (70) to assess if the request is valid, by determining
i) whether or not the request signal is longer than a first predetermined time-period (Δt1); and
ii) whether or not, during a second predetermined time-period (Δt2), the request signal (S₅₂, S₅₄, S₅₆) takes the neutral value (0).

2. The method of claim 1, wherein the first predetermined time-period (Δt1) is at least 3 ms, preferably at least 150 ms.

3. The method of any of the preceding claims, wherein the first predetermined time-period (Δt1) is larger than, or equal to, a predetermined number of a signal frames (SF) of the request signal (S₅₂, S₅₄, S₅₆).

4. The method of any of the preceding claims, wherein the second predetermined time-period (Δt2) is at least 10 ms, preferably at least 500 ms.

5. The method of any of the preceding claims, wherein the second predetermined time-period (Δt2) is larger than, or equal to, a predetermined number of signal frames (SF) of the request signal (S₅₂, S₅₄, S₅₆).

6. The method of any of the preceding claims, wherein at least some request signals (S₅₂, S₅₄, S₅₆; S₅₂, S₅₆) are sent to a central ECU (51), wherein the central ECU sends the control signals (S₅₁) to the park brake control unit (62) and wherein the safety check (1006-1016) is performed by the request arbitrator (70) within the central ECU.

7. The method of any of the preceding claims, wherein the request signals (S₅₂, S₅₄, S₅₆) include at least some of the following requests for park brake:
• application of park brake;
• release of park brake;
• proportional control of park brake;
• pre-release of park brake; and
• release inhibition of park brake.

8. The method of any of the preceding claims, wherein the vehicle includes a tractor (21) and at least one trailer (22) and wherein the control signals (S₅₁) include at least some of the following requests for an air supply line of the trailer
• air supply;
• air exhaust;
• proportional control;
• air supply inhibition

9. The method of any of the preceding claims, comprising at least the following steps consisting in
a) receiving (1004) a request signal (S₅₂, S₅₄, S₅₆) in a ECU (51);
b) counting (1006) the time elapsed since step a);
c) comparing (1008) the time (t) elapsed since step a) to the first predetermined time-period (Δt1);
d) watching (1010) for a change of the request signal to a neutral value (0);
e) comparing (1012) the time counted in step b) (1006) to the second predetermined time-period (Δt2);
and wherein the request signal is valid only if
- the result of step c) (1008) is that the elapsed time (t) counted in step b) is larger than the first predetermined time-period (Δt1); and
- the result of step e) (1012) is that the elapsed time (t) counted in step b) is smaller than the second predetermined time-period (Δt2).

10. A computer system (50) for controlling at least one park brake relay valve (64) of a park brake system (66) of a vehicle (20), via control signals (S₅₁) sent to a park brake control unit (62) controlling the park brake relay valve, based on requests signals (S₅₂, S₅₄, S₅₆) received from at least one requester (52, 54, 56; 52, 56, 90-98), the request signals taking either at least one activated value (1), when the request is presented, or a neutral value (0), when the request is not presented, and the request signals being sent within a given signal frame, wherein the computer system comprises a request arbitrator (70) configured to, when a request signal (S₅₂, S₅₄, S₅₆) is received, perform a safety check (1006-1016) to assess if the request is valid, by determining
i) whether or not the request signal is longer than a first predetermined time-period (Δt1; and
ii) whether or not, during a second predetermined time-period (Δt2), the request signal (S₅₂, S₅₄, S₅₆) takes the neutral value (0).

11. A park brake system (66) of a vehicle (20), said park brake system comprising park brakes (26,28), a park brake relay valve (64), a park brake control unit (62) and a requester arbitrator (70) configured to implement a method according to one of claims 1 to 9.

12. The park brake system of claim 12, further comprising, a control unit (51) including the request arbitrator (70) and one or several requesters (52, 54, 56; 52, 56, 90-98) among a body builder module (52), a driver assistance control unit (54), an electronic brake system (56), a vehicle motion management module (90), a trailer brakes on-demand module (92), a collision mitigation module (94), a battery charging module (96) and/or a proactive engine start & stop module (98), logically connected to the control unit (51).

13. The park brake system of any one of claims 11 and 12, wherein the control unit is a vehicle central ECU (51).

14. The park brake system of claim 13, wherein the vehicle central ECU (51) includes at least some of the following modules : a vehicle motion management module (90), a collision mitigation module (92), a trailer on-demand brake module (94), a battery charging module (96), a proactive engine start and/or a stop module (98), capable of sending requests to the request arbitrator (70).

15. A vehicle (20) including a park brake system (66) according to one of claims 11 to 14.

## Amended claims

### Amended claims in accordance with Rule 137(2) EPC.

1. A computer-implemented method for controlling at least one park brake relay valve (64) of a park brake system (66) of a vehicle (20), via control signals (S₅₁) sent to a park brake control unit (62) controlling the park brake relay valve, based on requests signals (S₅₂, S₅₄, S₅₆) received from at least one requester (52, 54, 56; 52, 56, 90-98), the request signals taking either an activated value (1), when the request is presented, or a neutral value (0), when the request is not presented, and the request signals being sent with a given signal frame, the method comprising a safety check (1006-1016) performed, when a request signal (S₅₂, S₅₄, S₅₆) is received, by a request arbitrator (70) to assess if the request is valid, by determining
i) whether or not the request signal is longer than a first predetermined time-period (Δt1); and
ii) whether or not, during a second predetermined time-period (Δt2), the request signal (S₅₂, S₅₄, S₅₆) takes the neutral value (0)
**characterized in that**
- at least some request signals (S₅₂, S₅₄, S₅₆ ; S₅₂, S₅₆) are sent to a central ECU (51),
- the central ECU sends the control signals (S₅₁) to the park brake control unit (62) and
- the safety check (1006-1016) is performed by the request arbitrator (70) within the central ECU.

2. The method of claim 1, wherein the first predetermined time-period (Δt1) is at least 3 ms, preferably at least 150 ms.

3. The method of any of the preceding claims, wherein the first predetermined time-period (Δt1) is larger than, or equal to, a predetermined number of a signal frames (SF) of the request signal (S₅₂, S₅₄, S₅₆).

4. The method of any of the preceding claims, wherein the second predetermined time-period (Δt2) is at least 10 ms, preferably at least 500 ms.

5. The method of any of the preceding claims, wherein the second predetermined time-period (Δt2) is larger than, or equal to, a predetermined number of signal frames (SF) of the request signal (S₅₂, S₅₄, S₅₆).

6. The method of claim 5, the second predetermined time-period (Δt2) is larger than or equal to five times, preferably eight times, still preferably ten times, the signal frame (SF) of the request signal (S₅₂, S₅₄, S₅₆).

7. The method of any of the preceding claims, wherein the request signals (S₅₂, S₅₄, S₅₆) include at least some of the following requests for park brake:
• application of park brake;
• release of park brake;
• proportional control of park brake;
• pre-release of park brake; and
• release inhibition of park brake.

8. The method of any of the preceding claims, wherein the vehicle includes a tractor (21) and at least one trailer (22) and wherein the control signals (S₅₁) include at least some of the following requests for an air supply line of the trailer
• air supply;
• air exhaust;
• proportional control;
• air supply inhibition

9. The method of any of the preceding claims, comprising at least the following steps consisting in
a) receiving (1004) a request signal (S₅₂, S₅₄, S₅₆) in a ECU (51);
b) counting (1006) the time elapsed since step a);
c) comparing (1008) the time (t) elapsed since step a) to the first predetermined time-period (Δt1);
d) watching (1010) for a change of the request signal to a neutral value (0);
e) comparing (1012) the time counted in step b) (1006) to the second predetermined time-period (Δt2);
and wherein the request signal is valid only if
- the result of step c) (1008) is that the elapsed time (t) counted in step b) is larger than the first predetermined time-period (Δt1); and
- the result of step e) (1012) is that the elapsed time (t) counted in step b) is smaller than the second predetermined time-period (Δt2).

10. A computer system (50) for controlling at least one park brake relay valve (64) of a park brake system (66) of a vehicle (20), via control signals (S₅₁) sent to a park brake control unit (62) controlling the park brake relay valve, based on requests signals (S₅₂, S₅₄, S₅₆) received from at least one requester (52, 54, 56; 52, 56, 90-98), the request signals taking either at least one activated value (1), when the request is presented, or a neutral value (0), when the request is not presented, and the request signals being sent within a given signal frame, wherein the computer system comprises a request arbitrator (70) configured to, when a request signal (S₅₂, S₅₄, S₅₆) is received, perform a safety check (1006-1016) to assess if the request is valid, by determining
i) whether or not the request signal is longer than a first predetermined time-period (Δt1; and
ii) whether or not, during a second predetermined time-period (Δt2), the request signal (S₅₂, S₅₄, S₅₆) takes the neutral value (0)
**characterized in that** the computer system (50) includes a central ECU (51) and **in that**
- at least some request signals (S₅₂, S₅₄, S₅₆ ; S₅₂, S₅₆) are sent to the central ECU (51),
- the central ECU sends the control signals (S₅₁) to the park brake control unit (62) and
- the safety check (1006-1016) is performed by the request arbitrator (70) within the central ECU.

11. A park brake system (66) of a vehicle (20), said park brake system comprising park brakes (26,28), a park brake relay valve (64), a park brake control unit (62) and a requester arbitrator (70) configured to implement a method according to one of claims 1 to 9, wherein a control unit (51) includes the request arbitrator (70) and one or several requesters (52, 54, 56; 52, 56, 90-98) among a body builder module (52), a driver assistance control unit (54), an electronic brake system (56), a vehicle motion management module (90), a trailer brakes on-demand module (92), a collision mitigation module (94), a battery charging module (96) and/or a proactive engine start & stop module (98), logically connected to the control unit (51).

12. The park brake system of claim 11, wherein the control unit is a vehicle central ECU (51).

13. The park brake system of claim 12, wherein the vehicle central ECU (51) includes at least some of the following modules : a vehicle motion management module (90), a collision mitigation module (92), a trailer on-demand brake module (94), a battery charging module (96), a proactive engine start and/or a stop module (98), capable of sending requests to the request arbitrator (70).

14. A vehicle (20) including a park brake system (66) according to one of claims 11 to 13.

15. The vehicle of claim 15 further including a tractor (21) and a trailer (22), wherein the park brake system (66) controls, on the one hand, a park brake relay valve (64) of the tractor and, on the other hand, an air supply line of the trailer.
